**Europäisches Patentamt**

(19) **European Patent Office**

**Office européen des brevets**

(11) Veröffentlichungsnummer: **0 171 772**

**A2**

(12) # EUROPÄISCHE PATENTANMELDUNG

(21) Anmeldenummer: **85110048.7**

(22) Anmeldetag: **09.08.85**

(51) Int. Cl.⁴: **G 05 B 13/04**

(30) Priorität: **13.08.84 DE 3429718**

(43) Veröffentlichungstag der Anmeldung:
**19.02.86 Patentblatt 86/8**

(84) Benannte Vertragsstaaten:
**AT BE FR GB IT SE**

(71) Anmelder: **CARL SCHENCK AG**
**Landwehrstrasse 55 Postfach 40 18**
**D-6100 Darmstadt(DE)**

(72) Erfinder: **Lobenhoffer, Hans, Dipl.-Ing.**
**Zur Akelei 6**
**D-3400 Göttingen(DE)**

(74) Vertreter: **Dallhammer, Herbert, Dipl.-Ing.**
**CARL SCHENCK AG Patentabteilung Postfach 4018**
**Landwehrstrasse 55**
**D-6100 Darmstadt(DE)**

(54) Verfahren zur Herstellung von Werkstoffkörpern.

(57) Die Erfindung betrifft ein Verfahren zur Herstellung von Werkstoffkörpern, insbesondere Spanplatten oder ähnlichen Werkstoffen, bei welchem die Kosten minimiert, zugleich aber vorzugebende Qualitätsmerkmale mit einer ebenfalls vorzugebenden statistischen Sicherheit eingehalten werden.

Das Verfahren erreicht dies durch Einstellung von Stellgrößen, welche mittels einer Vorhersage der Qualititätsmerkmale und von optimalen Werten der Stellgrößen am Eingang der Fertigungsstraße für die Körper bestimmt werden. Dabei werden die technischen und technologischen Begrenzungen und die Kostengewichte voll berücksichtigt. Am Ende der Fertigungsstraße wird mit weiteren, in der Fertigungsstraße anfallenden Meßwerten eine Kontrollschätzung gemacht, die Signifikanz einer Abweichung geprüft und ggf. die Einstellung der Eingangswerte abgeändert.

Das Verfahren benütz je nach der technischen Struktur der gegebenen Fertigungsstraße verschiedene Optimierungsansätze. Der technische Fortschritt liegt in einer Steigerung der Dichte der Qualitätskontrolle um mehrere Größenordnungen. Der wirtschaftliche Vorteil liegt in einer Einsparung an Fertigungsmaterial und Energie um 1 - 3 % der Herstellkosten.

Verfahren zur Herstellung von Werkstoffkörpern

Die Erfindung betrifft ein Verfahren zur Herstellung von Werkstoffkörpern, vorzugsweise Holzwerkstoffkörpern oder ähnlichen Werkstoffen, in einem kontinuierlichen Verfahren. Sie stellt sich die Aufgabe, die zu gewährleistenden Eigenschaften der Produkte durch eine optimale Einstellung der Stellgrößen der Maschinenanlage zu sichern und anlagen-, rohstoff- und zufallsbedingte Schwankungen optimal auszugleichen, wobei die Herstellkosten minimiert werden sollen.

1. Bei der Erzeugung der Werkstoffe wird das Rohmaterial (Holz, Holz- u. a. Abfälle) zerkleinert, bei Bedarf getrocknet, klassiert und dann mit flüssigen oder pulvrigen Bindemitteln (Leimharze, Wasserglas, Zement, Gips) vermischt. Diese Mischungen werden dann in einer oder mehreren Schichten auf Transportbändern zu Rohmatten gestreut, in Pressen (Band-, Rollen-, Plattenpressen) verdichtet und ggf. unter Wärmeeinwirkung verfestigt, sodann bei Bedarf gekühlt, getempert und/oder klimatisiert. Die Rohplatten werden besäumt und geschliffen.

1.1 Die Eigenschaften des Werkstoffes entstehen weitgehend beim Preßvorgang. Sie werden durch Art und Menge der eingesetzten Rohstoffe und Bindemittel, den Plattenaufbau und die Verfahrenstechnik bestimmt. Für die Fertigung werden günstige Arbeitspunkte festgelegt. Durch die Einstellung von Stellgrößen (Kontrollvariable $x_c$) werden vorgegebene Produkteigenschaften (Zielgrößen, Zustandsvariable $y_z$) mit bestimmten Sicherheiten eingehalten. Die Stellgrößen werden z. T. automatisch auf ihren Sollwerten gehalten, z. T. nach Meßgeräten manuell nachgestellt.

- 2 -

1.2 Andere, meßbare Einflußgrößen (Einflußgrößen $x_s$) können nicht oder nur sehr langsam nachgestellt werden. Die Auswirkungen ihrer Schwankungen können mit den Kontrollvariablen ausgeglichen werden. Ferner treten nicht meßbare oder zufallsbedingte Einflüsse auf (Störvariable u, v, n).

1.3 Die Platteneigenschaften teilt man in zwei Gruppen: solche, die hinter der Presse in Echtzeit zerstörungsfrei meßbar sind (Ausgangsgrößen $y_a$) und solche, die nur in zerstörender Prüfung im Labor meßbar sind (Zustandsvariable $y_z$). Leider gehören die zu gewährleistenden Produkteigenschaften, die Zielgrößen, alle zu dieser Klasse (Festigkeiten, Quellungseigenschaften). Da die Prüfergebnisse erst viele Stunden (2 .. 30 h) nach Pressung vor-liegen, müssen die Zielgrößen für alle Echtzeitbetrachtungen aus den verfügbaren Signalen geschätzt werden.

2. Es hat sich gezeigt, daß man aus genügend großen Beobach-tungsreihen ($N \geqslant 30$) der Eingangs-, Ausgangs- und Zielgrößen sehr hoch gesicherte Schätzfunktionen/ für die Zielgrößen ableiten kann. Mit neu eintreffenden Beobachtungen von Eingangs- und Ausgangsgrößen lassen sich dann sehr zuverlässige Schätzungen der Zielgrößen in Echtzeit machen. Erfindungsgemäß werden hierfür an sich bekannte multivariate Systeme interdependenter linearer Gleichungen oder näherungsweise Systeme scheinbar unverbundener Gleichungen verwendet. Bei Verwendung lag-verteilter Variabler kann mit diesen Systemen und/oder Armax-Modellen die Zeitstruktur des Prozesses identifiziert werden. Danach richtet sich die Wahl der Steuerfunktion für die Stellgrößen.

Alle für die on-line Bestimmung der Stellgrößen notwendigen Parameter können off-line berechnet und im Prozeßrechner gespeichert werden.

3. Die Einhaltung der Grenzwerte für die Zielgrößen wird nach den geltenden Bestimmungen (z. B. DIN 68 763 u. a. m.) durch eine Fremd- und eine Eigenüberwachung gesichert. In der Eigenüberwachung wird in großen Zeitabständen (8 h und mehr) je eine Platte bzw. ein Teil entnommen und geprüft. Die Varianz der Fertigung wird vorher durch eine größere Stichprobe festgestellt und nunmehr anhand des Prüfergebnisses entschieden, ob die Produktion zur Entnahmezeit in Kontrolle war.

Das Verfahren hat folgende Nachteile:

Das Prüfergebnis liegt erst 2 .. 3o h nach Pressung vor und ist daher für Regelung und Steuerung kaum verwertbar.

Über die Ursachen von Abweichungen wird nichts ausgesagt.

Über Abweichungen zwischen den Entnahmezeitpunkten wird nichts ausgesagt, die Kontrolle ist nicht dicht.

Die nur aus den Meßergebnissen der zerstörenden Materialprüfung ermittelten Varianzen sind größer als die in dem erfindungsgemäßen Verfahren verwendeten Varianzen der Vorhersagen, bedingen also höhere und damit teurere Produktionsmittelwerte.

Die technologischen Informationen aus den laufend anfallenden Messungen in der Fabrikation werden nicht genutzt.

3.1 Das erfindungsgemäße Verfahren stützt sich auf die laufende Verarbeitung der Messungen von an sich bekannten Meßstellen im gesamten Fertigungsfluß vor und nach der Presse bis einschließlich der Ablage der Platten oder Teile nach der Kühlung oder Klimatisierung, um daraus Vorhersagen für die Ausgangs- und Zielgrößen und Anweisungen für die Stellgrößen zu machen. Die Einstellungen der Stellgrößen können automatisch oder manuell erfolgen. Man kann somit Schwankungen in den Eingangs- und erwartete Abweichungen in den Ausgangs- und Zielgrößen unverzüglich ausgleichen, und sich so nahe als möglich am
Kostenminimum halten. Außerdem hat sich gezeigt, daß
die Varianz der Vorhersage mit Regressoren wesentlich
geringer ist als die nur aus der zerstörenden Prüfung
ermittelte Varianz der Qualitätsmerkmale, was Materialersparnisse ermöglicht.

3.2    Das Verfahren arbeitet in 2 Schritten:

3.2.1  Kurz vor der Pressung wird mit den bereits realisierten Eingangsgrößen $x_s$ und ggf. Vergangenheitswerten
dieser Größen und von Ausgangsgrößen eine Vorhersage
der Zielgrößen für den nächsten Preßtakt gemacht und
mit Benützung von Sicherheitszuschlägen mit den Güteschranken verglichen. Abweichungen werden durch geeignete (s. u.) Veränderung der Einstellungen der Kontrollvariablen ausgeglichen. Zugleich werden die Kosten
minimiert.

3.2.2  Nach Realisation der Ausgangsgrößen wird eine Kontrollschätzung der Zielgrößen gemacht, und mit der Schätzung
vor der Pressung und den Güteschranken verglichen. Der
Unterschied wird auf Signifikanz geprüft und über eine
zusätzliche Veränderung der Eingangsgrößen bei Bedarf
minimiert.

3.3    Das Verfahren bestimmt die notwendigen Veränderungen
der Stellgrößen auf folgende Weise:

3.3.1  Bei statischen Prozessen (mit seriell nicht oder sehr
schwach korrelierten Zielvariablen) werden die Einstellwerte der Stellgrößen in einem ebenfalls statischen Optimierungssystem für den nächsten Pressentakt,
oder für mehrere Pressentakte festgelegt. Das Optimierungssystem besteht aus einer linearen Zielfunktion der mit ihren Einheitskosten bewerteten Eingangs- und Kontrollgrößen und einem Satz nichtlinearer Nebenbedingungen, die aber näherungsweise linearisiert werden können.

3.3.2 Bei dynamischen Prozessen, welche mit einer linearen, stochastischen Differenzgleichung beschrieben werden können, sind 2 Fälle zu unterscheiden:

3.3.2.1 Wenn die Kontrollvariablen als unbeschränkt anzusehen sind und ein in den Ziel- und Kontrollvariablen quadratisches Gütefunktional den Bedingungen entspricht, erhält man für einen stationären Prozeß ein lineares, stationäres Rückführgesetz für die Zielgrößen (Zustandsvariablen). Sie müssen allerdings, da nicht on-line meßbar, aus den meßbaren Signalen geschätzt werden. Da die Ausgangssignale anlagenbedingt nur mit einer größeren oder kleineren Totzeit geschätzt werden können, eignet sich dieses Verfahren vor allem für Rollen- oder Bandpressenanlagen, in welchen die Totzeiten sehr klein sind. Ferner müssen die Abtastzeiten für die Signale kurz genug sein, um eine eindeutige Identifizierung der Prozeßdynamik und der Steuerung zu ermöglichen.

3.3.2.2 Wenn die Kontrollvariablen beschränkt sind, muß die Veränderung der Stellgrößen nach dem Maximum Prinzip von Pontryagin ermittelt werden. Auch diese Steuerung kann off-line berechnet und gespeichert werden. Wenn dann mit dem o. a. Schätzverfahren eine Anfangsabweichung der Zielgrößen festgestellt worden ist, können die Stellgrößen/entsprechend der Steuerung so eingestellt werden, daß die Zielgrößen in einer vorgegebenen Zeit bei minimalen Kosten auf die Sollwerte geführt werden. Auch für dieses Verfahren sind kurze Abtastzeiten erforderlich.

4. Für alle Verfahren zur optimalen Einstellung der Stellgrößen ist es erforderlich, die örltich und zeitlich verteilt anfallenden Messungen auf bestimmte Zeitpunkte und Orte zu konzentrieren. Für die Steuerung soll dies die Einstreustelle für das Material auf das Transportband unmittelbar vor der Presse sein, für die Ausgangsgrößen der Takt nach der Pressung oder Kühlung. Die Meßwerte vor der Einstreuung sollen und können weitgehend in der Mischstation Partikel-Bindemittel gemessen werden, da von dort eine eindeutige Zuordnung zur Einstreustelle über die durchlaufenden Gewichte in den einzelnen Materialflüssen möglich ist.

Für eine zuverlässige Voraussage der Zielgrößen sollen folgende Meßwerte zur Verfügung stehen:

4.1 Einflußgrößen:

4.1.1 Anteile der verschiedenen Rohstoffarten und Sortimente, Fraktionsverteilung der Partikel (Späne, Fasern), Feuchten der Partikel vor der Beleimung und bei der Einstreuung (auch als Kontrollvariable möglich), Temperatur der Partikel nach der Beleimung bzw. Mischung mit Bindemitteln, Liegezeit der mit Bindemitteln versehenen Partikel, Schüttdichte der beleimten Partikel.

4.1.2 Art und Zusammensetzung, Temperatur, Viskosität der Bindemittel, Belastung der Mischmaschinen, spezifische Mischungsarbeit, Bindemittelmenge je Gewichtseinheit der Partikel (letzteres auch als Kontrollvariable geeignet).

4.2 Kontrollvariable:

Einstreumengen je Rohplattenschicht und gesamt je Rohmatte, Schütthöhe der Rohmatte, Dickeneinstellung der Presse,
Verdichtungsprogramm, Druckprogramm, Temperatur der Presse, Preßzeit, Lüftzeit.

Dazu - soweit rasch einstellbar - Feuchten und Beleimungsfaktoren.

4.3 Ausgangsgrößen:

Rohplattengewicht, -feuchte, -dicke, Biege- Querdruck-E-
Moduli, Gleitmodul, Einstechwiderstand.

Weitere Meßwerte können verarbeitet werden. Die Aufteilung der Meßstellen zwischen Einflußgrößen und Kontrollvariablen ist von den Stellmöglichkeiten abhängig und nur
als Beispiel für eine Spanplattenfertigung genannt.

Das Verfahren setzt zunächst für die Berechnung der Parameter einen streng stationären Prozeß voraus, was bei voll
eingelaufenen Fabriken weitgehend zutrifft. Dennoch wird
diese Voraussetzung beim Eintreffen eines Satzes von Beobachtungen der on-line geschätzten Zielgrößen aus der
Werkstoffprüfung laufend durch entsprechende Teste überprüft und bei Bedarf werden die Parameter fortgeschrieben.

5. Die technischen und wirtschaftlichen Vorteile des erfindungsgemäßen Fertigungsverfahrens beruhen auf folgenden
technischen Fortschritten:

5.1 Durch die Verdichtung der Kontrolle der Zielgrößen erhebliche Steigerung der Qualitätssicherheit.

5.2 Echtzeitkontrolle der nicht meßbaren Zielgrößen bei Minimierung der Vorhersagevarianz, also größtmöglicher Genauigkeit.

5.3 Sofortiger Eingriff bei Abweichungen der Zielgrößen von den Sollwerten, dadurch Minimierung der Abweichung nach Zeit und Menge.

5.4 Volle Nutzung der qualitätssteigernden und kostenmindernden technischen Möglichkeiten einer Fertigungsanlage durch Quantisierung der Wirkung der Fertigungs- und der Störvariablen.

5.5 Minimierung der Kosten für Material und Energie.

Nach bisheriger Beobachtung kann eine Einsparung von 1 .. 2,5 % der Herstellkosten bis zu diesem Abschnitt - d. i. von etwa 95 % der gesamten Herstellkosten - erwartet werden. Das ist bei Spanplatten der Verleimung V 2o etwa ein Betrag von 2,0 DM/m$^3$ nach dem heutigen Kostenstand. Bei großen Fabriken mit einer Erzeugungsmenge von 15o ooo bis 35o ooo m$^3$/a sind die Einsparungen sehr erheblich. Die Investitionskosten werden in 1 bis 1,5 Jahren amortisiert, je nach den bereits vorhandenen Einrichtungen an Meßgeräten und Prozeßrechnern. Wegen des Gewinns an Sicherheit wird auch die Marktstellung von Produkten, welche nach diesem Verfahren hergestellt werden, gestärkt werden, was bei reifen Produkten besonders wichtig ist.

Patentansprüche:

1. Verfahren zur Herstellung von Werkstoffkörpern, insbesondere Holzwerkstoffkörpern, in einem kontinuierlichen oder halbkontinuierlichen Prozeß, dadurch gekennzeichnet, daß aus Signalen an sich bekannter verteilter Meßstellen konzentrierte Meßwerte gebildet werden, daß mit erfindungsgemäßen Schätzfunktionen vor der Presse Vorhersagen der Ziel- und Ausgangsgrößen gemacht werden, daß mit einem der Zeitstruktur des Prozesses erfindungsgemäß entsprechenden Optimierungsverfahren die Stellwerte der Kontrollvariablen des Prozesses eingestellt werden, daß nach Realisierung der Ausgangsgrößen mit diesen eine 2. Schätzung der Zielvariablen gemacht wird, und daß bei einer signifikanten Abweichung von den Sollwerten die Stellgrößen entsprechend verändert werden.

2. Verfahren nach 1., dadurch gekennzeichnet, daß zur Schätzung vor der Presse und zur Prozeßidentifikation an sich bekannte Systeme multivariater interdependenter oder scheinbar unverbundener Gleichungen verwandt werden, die auch lag-verteilte Variable und Arma-Modelle bzw. Transferfunktionen enthalten dürfen.

3. Verfahren nach 1. und 2., dadurch gekennzeichnet, daß die Schätzungen nach der Presse mit entsprechenden Systemen oder für dynamische Prozesse mit Filtern gemacht werden.

4. Verfahren nach 1. bis 3., dadurch gekennzeichnet, daß die Werte der Stellgrößen für einen statischen Prozeß in einem Optimierungsprogramm mit linearer Zielfunktion und nichtlinearen Nebenbedingungen, die aber in Näherung linearisiert werden können, jeweils für den nächsten Fertigungstakt oder einige Fertigungstakte ermittelt werden.

5. Verfahren nach 1. bis 3., dadurch gekennzeichnet, daß die Werte der Stellgrößen für einen dynamischen Prozeß, welcher durch eine lineare stochastische Differenzgleichung beschrieben werden kann, bei unbeschränkten Stellgrößen und Verwendung eines quadratischen Gütefunktionals mittels eines linearen Rückführgesetzes der Zielgrößen bestimmt werden, und daß diese, da nicht meßbar, durch ein Filter oder eine Regression aus den Eingangs- und Ausgangsgrößen geschätzt werden.

6. Verfahren nach 1. bis 3., dadurch gekennzeichnet, daß für einen dynamischen, durch eine lineare stochastische Differenzgleichung darstellbaren Prozeß mit beschränkten Stellgrößen die Werte der Stellgrößen durch eine Steuerung nach dem Miximumprinzip von Pontryagin bestimmt werden, welche eine nach 2. oder 3. geschätzte Anfangsabweichung der Zielgrößen unter Minimierung der Kosten in vorgegebener Zeit auf Sollwerte (Güteschranken) zurückführt.

7. Verfahren nach 1. bis 6., dadurch gekennzeichnet, daß die Schätzung nach Realisation der Ausgangsgrößen zur Schätzung der Regelabweichung der Zielgrößen von den Sollwerten verwandt und ihr Erwartungswert, falls signifikant von Null verschieden, über die Kontrollvariablen ausgeregelt wird.

8. Verfahren nach 1. bis 7., dadurch gekennzeichnet, daß bei Eintreffen einer neuen Beobachtung der nicht in Echtzeit meßbaren Zielgrößen die Voraussetzung der Stationärität des Prozesses und der Parameter durch geeignete statistische Teste überprüft wird und die Parameter in geeigneter Weise fortgeschrieben oder neu berechnet werden.